# EUROPÄISCHE PATENTSCHRIFT

(11) **EP 3 570 987 B1**
(45) Veröffentlichungstag und Bekanntmachung des Hinweises auf die Patenterteilung: **20.01.2021**
(21) Anmeldenummer: 18703559.7
(22) Anmeldetag: 02.02.2018
(51) Int. Cl.: B08B 7/02, B23Q 11/00

(54) **REINIGUNGSVORRICHTUNG UND REINIGUNGSVERFAHREN FÜR WERKSTÜCKE**
CLEANING DEVICE AND PROCESS FOR WORKPIECES
DISPOSITIF ET PROCÉDÉ DE NETTOYAGE DE PIÈCES DE FABRICATION

(30) Priorität: 13.02.2017 DE 102017102758
(43) Veröffentlichungstag der Anmeldung: 27.11.2019
(73) Patentinhaber: Alfing Kessler Sondermaschinen GmbH, 73433 Aalen (DE)
(72) Erfinder: KRIEGER, Manfred, 73574 Iggingen (DE); BURKHARDT, Rainer, 73433 Aalen (DE); SUGLOB, Artur, 73614 Schorndorf (DE); SCHWAB, Peter, 73431 Aalen (DE)
(74) Vertreter: Patentanwälte Bregenzer und Reule Partnerschaftsgesellschaft mbB
(86) Internationale Anmeldenummer: PCT/EP2018/052693
(87) Internationale Veröffentlichungsnummer: WO 2018/146024

(56) Entgegenhaltungen:
- DE-A1- 10 336 390
- DE-A1-102009 056 519
- DE-A1-102015 112 821

## Beschreibung

Die Erfindung betrifft eine Reinigungsvorrichtung zur Reinigung mindestens einer Bruchtrennfläche eines Werkstücks, die durch Bruchtrennung hergestellt ist, wobei die Reinigungsvorrichtung mindestens eine Vibrationseinrichtung zur Erzeugung von Vibrationen des Werkstücks und einen Werkstückhalter zum Halten des Werkstücks aufweist. Die Erfindung betrifft ferner ein Reinigungsverfahren.

Eine derartige Reinigungsvorrichtung ist beispielsweise in DE 103 36 390 A1 erläutert.

Bei einer aus DE 199 50 140 C2 bekannten Reinigungsvorrichtung werden ein Deckel und ein Pleuelfuß eines Pleuels mit geringer Kraft gegeneinander bewegt, sodass Partikel von den Bruchtrennflächen der beiden vorher durch Bruchtrennung voneinander getrennten Werkstückteile des Pleuel-Werkstücks abfallen. Die Bruchtrennflächen können dabei zumindest geringfügig beschädigt werden, was die Passgenauigkeit der Werkstückteile aneinander verringert.

Es ist daher die Aufgabe der vorliegenden Erfindung, eine verbesserte Reinigungsvorrichtung sowie ein verbessertes Reinigungsverfahren bereitzustellen.

Zur Lösung der Aufgabe ist bei einer Reinigungsvorrichtung der eingangs genannten Art vorgesehen, dass der Werkstückhalter ein Stützteil zum Auflegen des Werkstücks und ein dem Stützteil gegenüberliegendes Niederhalteelement aufweist, zwischen denen das Werkstück mit einem vertikalen Bewegungsspielraum gehalten ist, und dass die Vibrationseinrichtung einen Vibrationsantrieb und einen durch den Vibrationsantrieb antreibbaren Mitnehmer zum Beschleunigen des Werkstücks in Richtung des Niederhalteelements aufweist, sodass das Werkstück gegen das Niederhalteelement prallt und Verunreinigungen von der Bruchtrennfläche abfallen.

Das Reinigungsverfahren zur Reinigung mindestens einer Bruchtrennfläche eines Werkstücks, die durch Bruchtrennung hergestellt ist, sieht vor:
- Erzeugung von Vibrationen des Werkstücks, welches an einem Werkstückhalter gehalten ist, anhand einer Vibrationseinrichtung,
- Halten des Werkstücks zwischen einem Stützteil des Werkstückhalters, auf das das Werkstück aufgelegt ist, und einem dem Stützteil gegenüberliegenden Niederhalteelement, zwischen denen das Werkstück mit einem vertikalen Bewegungsspielraum gehalten ist, und
- Beschleunigen des Werkstücks in Richtung des Niederhalteelements durch einen Mitnehmer der Vibrationseinrichtung, sodass das Werkstück gegen das Niederhalteelement prallt und Verunreinigungen von der Bruchtrennfläche abfallen.

Es ist ein Grundgedanke, dass das Werkstück, beispielsweise ein Pleuel, eine Auf- und Abbewegung durchläuft, wobei das Werkstück an das Niederhalteelement anschlägt und von der Bruchtrennfläche Verunreinigungen, insbesondere Bruchtrenn-Partikel, abfallen.

Bevorzugt ist es, wenn ein oberer Bewegungsumkehrpunkt des Mitnehmers zu einer Bewegungsumkehr aus einer Bewegungsrichtung zu dem Niederhalteelement hin zu einer Bewegungsrichtung von dem Niederhalteelement weg so angeordnet ist, dass das Werkstück vor dem Aufprall auf das Niederhalteelement von dem Mitnehmer freikommt. Der Mitnehmer beginnt also sozusagen seine Abwärtsbewegung, d.h. die Bewegung vom Niederhalteelement weg, bevor das Werkstück am Niederhalteelement anschlägt. Somit bremst der Mitnehmer das Werkstück sozusagen nicht ab. Weiterhin führt der Mitnehmer zu keiner Bewegungsdämpfung oder Schwingungsdämpfung des Werkstücks. Vielmehr kann das Werkstück frei auf das Niederhalteelement aufprallen, was eine optimale Loslösung von Partikeln oder anderen Verunreinigungen von der Bruchtrennfläche ermöglicht.

An dieser Stelle sei erwähnt, dass selbstverständlich das Werkstück mehrere Bruchtrennflächen aufweisen kann. Weiterhin ist das Werkstück vorzugsweise mehrteilig und besteht aus einem ersten und mindestens einem zweiten Werkstückteil, die durch die Bruchtrennung voneinander getrennt sind.

Beispielsweise ist das Werkstück ein Motorbauteil, beispielsweise ein Motorblock. Es ist auch möglich dass das Werkstück ein Pleuel ist. Besonders bevorzugt ist es, wenn die Bruchtrennfläche neben einer Lageraufnahme des Werkstücks angeordnet ist. Zweckmäßigerweise sind mehrere Bruchtrennflächen neben der Lageraufnahme angeordnet. Beispielsweise sind insgesamt vier Bruchtrennflächen durch die Reinigungsvorrichtung zu reinigen.

Bei dem Werkstück handelt es sich beispielsweise um ein Pleuel. Die Werkstückteile sind beispielsweise ein Pleuelfuß und ein Pleueldeckel, die durch die Bruchtrennung voneinander getrennt sind.

Ein weiterer vorteilhafter Aspekt ist es, wenn ein unterer Bewegungsumkehrpunkt des Mitnehmers zu einer Bewegungsumkehr aus einer Bewegungsrichtung zu dem Stützteil hin und von dem Stützteil weg so angeordnet ist, dass das Werkstück ungebremst durch den Mitnehmer frei auf das Stützteil aufprallen kann. Beispielsweise ist die Bewegung des Mitnehmers so ausgestaltet, dass er sozusagen vor dem Werkstück beim Stützteil ankommt, so dass das Werkstück selbst nicht durch den Mitnehmer abgebremst ist und frei auf das Stützteil aufprallen kann. Auch dadurch wird eine schlagartige oder impulsartige Beschleunigung des Werkstücks bewirkt, die bei der eingangs genannten Reinigungsvorrichtung nicht beobachtet wird.

Der Mitnehmer ist zweckmäßigerweise zu einem Beschleunigungseingriff an einer dem Stützteil zugewandten Unterseite des Werkstücks angeordnet, so dass das Werkstück von seiner Unterseite her in Richtung des Niederhalteelements beschleunigt. Besonders bevorzugt ist es, wenn der Mitnehmer im Bereich eines großen Auges oder allgemeiner gesagt einer Lagerausnehmung auf das Werkstück einwirkt. Der Mitnehmer stößt also sozusagen das Werkstück nach oben, so dass es gegen das Niederhalteelement anschlägt.

Bevorzugt es eine Anordnung derart, dass die Vibrationseinrichtung an einer Unterseite des Stützteils angeordnet ist und in eine Inaktivstellung verstellbar ist. In der Inaktivstellung ist der Mitnehmer außer Eingriff mit dem Werkstück. In der Inaktivstellung kann der Mitnehmer aber auch nicht vor eine Oberseite des Stützteils vorstehen. Beispielsweise fluchtet er mit einer Oberseite oder ist hinter die Oberseite zurückverstellt. Unter einer Oberseite soll in diesem Fall verstanden werden beispielsweise eine Anordnung von einer oder mehreren Stützflächen, auf denen das Werkstück aufliegt. Jedenfalls wird dadurch erreicht, dass das Werkstück für eine weitere Werkstückbearbeitung und/oder für eine Vorförderung zu einer neben der Reinigungsvorrichtung angeordneten Bearbeitungsstation freikommt.

Beispielsweise kann die Reinigungsvorrichtung nämlich einen Bestandteil einer Bearbeitungsmaschine oder einer Werkzeugmaschine bilden. Weiterhin kann die Reinigungsvorrichtung auch einen Bestandteil einer Bruchtrennvorrichtung oder einer Bruchtrennmaschine bilden.

Das Stützteil weist zweckmäßigerweise mindestens eine Durchtrittsöffnung für den Mitnehmer auf, durch den hindurch der Mitnehmer in Eingriff oder Kontakt mit dem Werkstück gelangen kann. So kann beispielsweise der Mitnehmer durch das Stützteil hindurch oder seitlich an dem Stützteil vorbei in Eingriff mit dem Werkstück gelangen. Es ist bevorzugt, wenn die Vibrationseinrichtung und/oder der Mitnehmer an einer Unterseite des Werkstückhalters angeordnet sind. Das Stützteil oder insgesamt der Werkstückhalter weist beispielsweise eine oder mehrere Durchtrittsöffnungen auf, durch die hindurch der Mitnehmer nach oben in Richtung des Werkstücks vorstehen kann und in Eingriff mit diesem gelangen kann.

Möglich ist beispielsweise aber auch eine Anordnung derart, dass der Mitnehmer an dem Stützteil vorbei, beispielsweise seitlich vorbei oder durch eine seitlich offene Ausnehmung, in Eingriff mit dem Werkstück gelangt. Beispielsweise sind gabelartige oder klammartige Konstruktionen denkbar.

Eine in der Zeichnung dargestellte und bevorzugte Ausführungsform der Erfindung sieht vor, dass der Mitnehmer eine Mitnehmer-Gabel aufweist. Der Mitnehmer kann auch mehrere Mitnehmer-Gabeln aufweisen oder die Gabel kann mehrere Arme haben, nämlich nicht nur zwei sondern drei oder mehrere Arme. Insbesondere ist es bevorzugt, wenn der Mitnehmer punktartig auf das Werkstück einwirkt oder an dem Werkstück angreift.

Es ist vorteilhaft, wenn der Mitnehmer oder die Mitnehmergabel beispielsweise beide Werkstückteile oder mehrere Werkstückteile beschleunigt, die vorher durch die Bruchtrennung voneinander getrennt worden sind.

Eine Ausführungsform der Erfindung sieht vor, dass der Mitnehmer einen Bestandteil des Werkstückhalters bildet. Beispielsweise kann der Mitnehmer an dem Stützteil angreifen und dieses sozusagen nach oben beschleunigen, so dass es in Richtung des Niederhalteelements betätigt wird. Der Werkstückhalter kann beispielsweise als eine Kassette oder ein Werkstückhalter-Modul ausgestaltet sein, welches seinerseits wiederum Werkstück-Fördereinrichtung angeordnet sein kann, beispielsweise einem Rundtisch, einem Förderband, einer Palette oder dergleichen. An dem Werkstückhalter können Haltekonturen, Führungskonturen, Klammerkonturen oder dergleichen andere Formschlusskonturen zu einer formschlüssigen und/oder klemmenden Verbindung mit der Werkstück-Fördereinrichtung vorgesehen sein. Die Werkstück-Fördereinrichtung kann einen Bestandteil der Reinigungsvorrichtung bilden.

Zweckmäßigerweise ist der Mitnehmer an dem Werkstückhalter beweglich gelagert. An dem Werkstückhalter können auch beispielsweise Führungen für den Mitnehmer vorgesehen sein.

Weiterhin ist es zweckmäßig, wenn der Mitnehmer durch eine Verliersicherung an dem Werkstückhalter unverlierbar gehalten ist. So kann der Mitnehmer sozusagen optimal an den Werkstückhalter angepasst sein. Wenn der Werkstückhalter weiter gefördert wird oder von der Werkstück-Fördereinrichtung entfernt wird, wird der Mitnehmer dabei sozusagen automatisch auch mit weitergefördert. Beispielsweise kann ein Haltearm oder Haltefinger in beweglichem Eingriff mit dem Mitnehmer sein, sodass dieser zwar relativ zum Werkstückhalter beweglich ist, jedoch nicht vom Werkstückhalter entfernbar ist, also verliersicher gehalten ist. Als Verliersicherung eignet sich beispielsweise auch mindestens ein Anschlag, an dem der Mitnehmer im Sinne eines Haltens an dem Werkstückhalter anschlägt.

Vorteilhaft kann auch vorgesehen sein, dass der Mitnehmer ein von dem Werkstückhalter separates Bauteil und/oder ein von dem Stützteil separates Bauteil bildet. Somit kann das Werkstück beispielsweise auf dem Stützteil an sich aufliegen und wird speziell für den Reinigungsvorgang durch den Mitnehmer in Richtung des Niederhalteelements beschleunigt. Ein derartiger Mitnehmer kann wie erläutert am Werkstückhalter beweglich gelagert oder geführt sein. Weiterhin ist bei diesem relativ zum Werkstückhalter beweglichen Mitnehmer vorteilhaft, wenn er durch eine Verliersicherung am Werkstückhalter gehalten ist.

Eine bevorzugte Variante der Erfindung sieht vor, dass der Werkstückhalter zum Halten einander zugeordneter und zueinander passender und durch die Bruchtrennung voneinander getrennter Werkstückteile vorgesehen und ausgestaltet ist. Beispielsweise kann der Werkstückhalter einen Pleuelfuß und einen Pleueldeckel halten.

Bevorzugt ist es weiterhin, wenn die Reinigungsvorrichtung zur Reinigung einander gegenüberliegender Bruchtrennflächen der Werkstückteile ausgestaltet ist. So können beispielsweise die durch die Bruchtrennung noch lose Partikel aufweisende und an den Bruchtrennflächen anhaftende Partikel durch die Reinigungsvorrichtung von den Bruchtrennflächen entfernt werden.

Bevorzugt ist es, wenn der Werkstückhalter zu einem Halten der Bruchtrennflächen in einem Abstand zueinander ausgestaltet ist. Die Bruchtrennflächen sind zwar zweckmäßigerweise recht nahe beieinander angeordnet. Beispielsweise ist der Abstand zwischen den Bruchtrennflächen kleiner als 1mm oder kleiner als 2mm. Allerdings ist der Abstand zwischen den Bruchtrennflächen zweckmäßigerweise so ausgestaltet, dass die typischerweise bei der Bruchtrennung auftretenden Partikel noch frei in dem Abstand zwischen den Bruchtrennflächen nach unten fallen können. Bevorzugt weist der Werkstückhalter Stützflächen zum Halten der Werkstückteile in einem Abstand zueinander auf. So können beispielsweise Stützpunkte oder Stützflächen des Stützteils so angeordnet sein oder Winkelflächen aufweisen, dass sie die Werkstückteile in einem Abstand zueinander halten. Es ist bevorzugt, wenn die Werkstückteile durch den Werkstückhalter in einem vordefinierten Abstand oder Mindestabstand gehalten werden oder über einen größten Abstand hinaus nicht voneinander wegbewegbar sind, so dass eine Relativposition der Werkstückteile eingehalten wird. Dies kann beispielsweise für eine weitere Bearbeitung, z.B. eine Verschraubung der Werkstückteile miteinander, vorteilhaft sein.

Bevorzugt ist es, wenn der Mitnehmer unmittelbar auf das Werkstück einwirkt bzw. dazu ausgestaltet ist.

Bevorzugt ist es weiterhin, wenn das Werkstück, sofern es mehrere voneinander getrennte Werkstückteile aufweist, durch den Mitnehmer insgesamt in Richtung des Niederhalteelements beschleunigbar ist. Prinzipiell möglich ist es zwar, dass nur ein Werkstückteil eines derartigen Werkstücks in Richtung des Niederhalteelements durch den Mitnehmer bzw. die Vibrationseinrichtung angetrieben wird. Es ist allerdings vorteilhaft, wenn mindestens zwei oder alle durch die Bruchtrennung voneinander getrennten Werkstückteile des Werkstücks in Richtung des Niederhalteelements durch den Mitnehmer beschleunigt werden.

Die Bruchtrennfläche weist dann, wenn das Werkstück im Werkstückhalter angeordnet oder vom Werkstückhalter gehalten ist, eine im Wesentlichen vertikale Orientierung auf. Die Orientierung kann auch streng vertikal sein.

Das Stützteil und das Niederhalteelement sind zum Halten des Werkstücks derart ausgestaltet und angeordnet, dass vorteilhaft das Werkstück verdrehsicher um mindestens eine, vorzugsweise mehrere oder alle Achsen, zwischen dem Stützteil und dem Niederhalteelement gehalten ist, die parallel oder im Wesentlichen parallel zur Anschlagebenen verlaufen, in denen das Stützteil und das Niederhalteelement das Werkstück halten. So können beispielsweise Stützflächen des Stützteils in einer ersten Anschlagebene und Anschlagflächen des Niederhalteelements, an die das Werkstück durch die Vibrationseinrichtung beschleunigt anschlägt, in einer zweiten Anschlagebene verlaufen oder angeordnet sein. In Bezug auf das Stützteil kann man die erste Anschlagebene auch als Halteebene bezeichnen. Diese Anschlagebenen oder Halteebenen sind vorzugsweise zueinander parallel. Das Werkstück kann nicht um Achsen verdreht werden, die zwischen den Anschlagebenen verlaufen. Beispielsweise kann ein Pleuel nicht um seine Längsachse, die zwischen dem großen und kleinen Lagerauge verläuft, gedreht werden. Der Vorteil dabei ist, dass der Werkstückhalter für eine weitere Werkstückbearbeitung zur Verfügung steht, beispielsweise durch eine Verschraubung eines Werkstückdeckels mit einem Werkstückfuß oder eines Pleueldeckels mit einem Pleuelfuß. Weiterhin ist es auch zweckmäßig, dass das Werkstück prinzipiell etwa in dergleichen Drehlage vom Werkstückhalter gehalten wird, auch wenn es durch die Vibrationseinrichtung zu Schwingungen angeregt wird. Dadurch ist auch eine weitere Bearbeitung, eine Vorförderung oder dergleichen, erleichtert.

Besonders bevorzugt ist es, wenn die Reinigungsvorrichtung einen Bestandteil einer Bearbeitungsmaschine oder einer Bruchtrennmaschine bildet. Die Bearbeitungsmaschine weist zweckmäßigerweise mindestens eine weitere Bearbeitungsstation auf. Es ist auch möglich, dass die Reinigungsvorrichtung einen Bestandteil einer Bearbeitungsstation bildet, beispielsweise einer Crack-Station zum Bruchtrennen von Werkstücken, einer Schraubstation zum Verschrauben der Werkstückteile miteinander oder dergleichen.

Das Stützteil und das Niederhalteelement sind zum Halten des Werkstücks derart ausgestaltet und angeordnet, dass das Werkstück zu einer Bearbeitung durch die weitere Bearbeitungsstation, beispielsweise durch zu einer Bohrung, Feinbearbeitung oder dergleichen, insbesondere jedoch zu einer Verschraubung von Zufuhr durch die Bruchtrennung voneinander getrennter Werkstückteile des Werkstücks in einer Relativposition gehalten ist, bei der die Bruchtrennflächen in der Werkstückteile aneinander anliegen. In diesem Fall ist es auch möglich, dass beispielsweise der Mitnehmer in eine Halteposition verstellt wird bei der er das Werkstück in Richtung des Niederhalteelements kraftbeaufschlagt, so dass die Werkstückteile zwischen dem Mitnehmer und dem Niederhalteelement gehalten sind.

Das Stützteil und/oder das Niederhalteelement bilden zweckmäßigerweise einen Bestandteil einer Werkstückhalteranordnung, beispielsweise eines Rundtisches, einer Palette oder dergleichen, zum Halten von mindestens zwei Werkstücken. Die Werkstücke sind anhand der Werkstückhalteranordnung oder anhand einer Werkstück-Fördereinrichtung zwischen mindestens zwei Bearbeitungsstationen förderbar, von denen eine die Reinigungsvorrichtung bildet.

Die Werkstückhalteranordnung oder der Werkstückhalter bildet zweckmäßigerweise einen Bestandteil einer Werkstück-Fördereinrichtung, beispielsweise eines Rundtisches oder dergleichen, oder sind an einer derartigen Werkstück-Fördereinrichtung lösbar befestigbar.

Das Stützteil und das Niederhalteelement können an einer Werkstückhalteeinrichtung angeordnet sein und/oder ein gemeinsames Modul bilden. Beispielsweise kann das Niederhalteelement an einer Werkstückkassette angeordnet sein. Das Niederhalteelement kann an der Werkstückkassette oder Werkstückhalteeinrichtung beweglich gelagert sein, beispielsweise zum Bestücken der Werkstückhalteeinrichtung mit dem Werkstück oder zum Entnehmen des Werkstücks von der Werkstückhalteeinrichtung.

Es ist möglich, dass das Niederhalteelement und das Stützteil voneinander separate und relativ zueinander bewegliche Komponenten sind. So kann beispielsweise das Niederhalteelement zum Stützteil und/oder Stützteil zum Niederhalteelement beweglich sein.

Es ist beispielsweise möglich, dass das Niederhalteelement an einem Werkstücktisch, insbesondere einem Rundtisch, angeordnet ist, an welchem das Stützteil, insbesondere eine Werkstückkassette mit dem Stützteil, angeordnet oder lösbar anordenbar ist.

Es ist weiter möglich, dass das Niederhalteelement ortsfest bezüglich einer Maschinenbasis angeordnet ist, während das Stützteil relativ zum Niederhalteelement bewegt wird. Eine Ausführungsform der Erfindung kann vorsehen, dass Niederhalteelement an einer Bearbeitungsstation ortsfest angeordnet ist. Das Stützteil, insbesondere wenn es an einem Werkstücktisch angeordnet ist, ist relativ zu dem Niederhalteelement bewegbar. So kann beispielsweise die Werkstückfördereinrichtungen mit dem daran angeordneten Stützteil in einem Bereich unter das Niederhalteelement bewegt werden. Ein Beispiel sieht vor, dass eine Rundtisch mit dem Stützteil unter das Niederhalteelement schwenkt oder dreht.

Das Lösen von Verunreinigungen, Partikeln oder dergleichen, vom Werkstück oder vom Werkstückhalter wird vorteilhaft durch eine Absaugeinrichtung und/oder eine Ausblaseinrichtung unterstützt.

Die Vibrationseinrichtung weist zweckmäßigerweise eine im Bereich einer Eigenfrequenz des Werkstücks oder der vom Werkstück abgelösten Verunreinigungen oder partikelliegende Antriebsfrequenz auf. Es kann vorgesehen sein, dass eine Amplitude des Vibrationsantriebs kleiner als eine an sich durch den Bewegungsspielraum zwischen dem Niederhalteelement und dem Stützteil vorgegebene Amplitude des Werkstücks ist.

Nachfolgend werden Ausführungsbeispiele der Erfindung anhand der Zeichnung erläutert. Es zeigen:
- Figur 1: eine schematische Seitenansicht einer Reinigungsvorrichtung als Bestandteil einer Bruchtrennmaschine, wobei ein Mitnehmer einer Vibrationseinrichtung außer Eingriff mit einem Werkstück ist,
- Figur 2: die Ansicht gemäß Figur 1, wobei jedoch der Mitnehmer in Vibrationseingriff oder Beschleunigungseingriff mit dem Werkstück ist,
- Figur 3: die Anordnung gemäß Figuren 1, 2, wobei der Mitnehmer in eine Inaktivstellung verstellt ist,
- Figur 4: eine untere stirnseitige Ansicht eines Werkstücks, insbesondere eines Pleuels, zur Bearbeitung durch die Bruchtrennmaschine gemäß vorstehender Figuren,
- Figur 5: eine schematische Draufsicht auf die Bruchtrennmaschine oder Werkstückbearbeitungsmaschine gemäß der Figuren 1 bis 3, und
- Figur 6: eine schematische Seitenansicht der Anordnung gemäß Figur 1, wobei jedoch ein Werkstückhalter von einer Werkstück-Fördereinrichtung oder einem Rundtisch entfernt ist.

Eine Reinigungsvorrichtung 10 gemäß der Zeichnung bildet einen Bestandteil einer Bruchtrennmaschine 11 oder einer Werkzeugmaschine. Die Bruchtrennmaschine 11 weist des Weiteren optional noch eine Schraubstation 12 mit Schraubwerkzeugen 13 auf. Die Schraubstation 12 bildet eine Bearbeitungsstation 14.

Die Bruchtrennmaschine 11 kann aber auch noch weitere Bearbeitungsstationen aufweisen, beispielsweise Bearbeitungsstationen 14B oder 14C. Beispielsweise können an den Bearbeitungsstationen 14B und 14C weitere Bearbeitungsschritte an dem nachfolgend erläuterten Werkstück 80 oder baugleichen bzw. ähnlichen Werkstücken 80 vorgenommen werden, beispielsweise Bohrarbeiten, Fräsarbeiten oder dergleichen andere Arbeiten.

Mindestens eine der Bearbeitungsstationen kann aber auch eine Bestückungsstation oder Entladestation sein, d.h. eine Station, bei der Werkstücke 80 an einer Werkstückhalteranordnung 25 der Bruchtrennmaschine 11 angeordnet oder von der Werkstückhalteranordnung 25 entfernt werden.

Die Werkstückhalteranordnung 25 weist mindestens einen, vorzugsweise mehrere Werkstückhalter 20 auf, auf deren Stützteile 21 Werkstücke 80 abgelegt werden können. Es kann aber auch nur ein Werkstückhalter 20 bei einer erfindungsgemäßen Reinigungsvorrichtung vorgesehen sein.

Das Werkstück 80 ist in der Bruchtrennmaschine 11 anhand einer schematisch dargestellten Bruchtrenneinrichtung 15 trennbar, so dass Werkstückteile 81, 82 entstehen. Bei dem Werkstück 80 handelt es sich exemplarisch um ein Pleuel 83. Das Pleuel 83 oder Werkstück 80 weist eine Lagerbohrung 84 sowie eine Lagerbohrung 85, beispielsweise ein kleines und ein großes Auge auf. Durch die Bruchtrennbearbeitung bzw. Bruchtrennung anhand der Bruchtrenneinrichtung 15 werden die Werkstückteile 81, 82 voneinander getrennt. Konkret wird ein Pleuel 82 von einem Pleuelfuß 86 abgetrennt. Beispielsweise handelt es sich bei der Bruchtrenneinrichtung um eine Einrichtung, die einen sogenannten Crackdorn aufweist. Die Bruchtrenneinrichtung 15 weist beispielsweise eine Spreizelementanordnung 16, insbesondere einen Spreizkeil oder Spreizdorn, mit Spreizelementen 17, 18 auf, die in die Lagerbohrung 85 einführbar sind und in einem Sinne voneinander weg bewegbar sind, um die Werkstückteile 81, 82 voneinander zu trennen.

Durch die Abtrennung der Werkstückteile 81, 82 entstehen zwischen den Werkstückteilen 81, 82 Bruchtrennflächen 88, 89, die dieselbe bzw. zueinander passende Topologie aufweist. Wenn die Bruchtrennflächen 88, 89 wieder aneinander gefügt werden, passen sie optimal aneinander. Allerdings können durch die vorgenannte Bruchtrennung Partikel an den Bruchtrennflächen 88, 89 anhaften, die sozusagen Störkonturen darstellen, wenn die Werkstückteile 81, 82 wieder aneinander angefügt werden. Zur Beseitigung dieses Problems ist die Reinigungsvorrichtung 10 vorgesehen, die nachfolgend deutlicher wird.

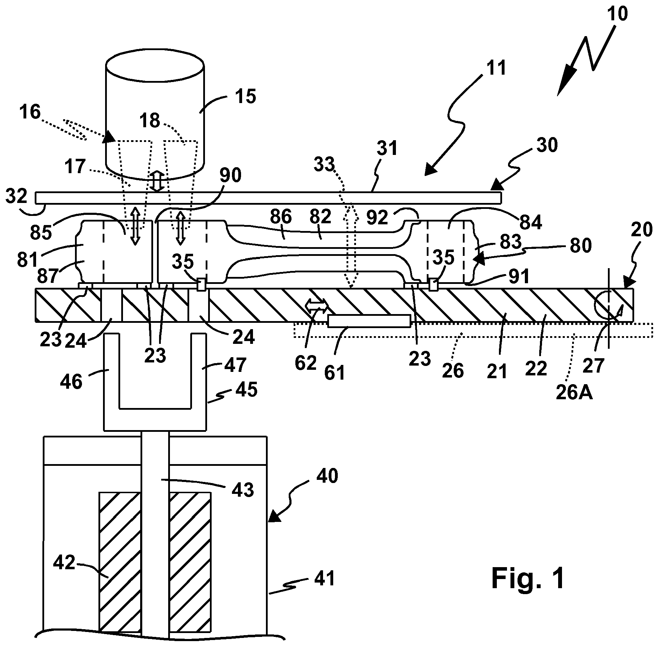

Die Reinigungsvorrichtung 10 weist den bereits erwähnten Werkstückhalter 20 auf, auf dessen Stützteil 21 das Werkstück 80 abgelegt werden kann. Das Stützteil 21 umfasst beispielsweise eine Stützplatte, eine Anordnung mehrerer Stützelemente oder dergleichen. Jedenfalls sind am Stützteil 21 mehrere Stützvorsprünge 23 oder Stützflächen 23 vorgesehen, auf die das Werkstück 80 abgelegt werden kann. Beispielsweise sind an seiner in der Zeichnung unteren Stirnseite 91 Stützflächen 93 vorgesehen, mit denen das Werkstück 80 auf dem Stützteil 81, insbesondere den Stützflächen oder Stützvorsprüngen 23 aufliegt. Diese Situation ist in Figur 1 dargestellt.

Das Stützteil 21 bildet beispielsweise einen Bestandteil der bereits erwähnten Werkstückhalteranordnung 25. Die Werkstückhalteranordnung 25 umfasst beispielsweise einen Rundtisch 26, der um eine Drehachse 27 drehbar ist. Zum Antreiben des Rundtisches 26 bzw. der Werkstückhalterung 25 ist ein Drehantrieb 29 vorgesehen. Somit kann beispielsweise der Werkstückhalter 20 gemäß Figuren 1 bis 3 jeweils in dem Bereich der Reinigungsvorrichtung 10 bewegt werden. Der Rundtisch 26 bildet insbesondere eine Werkstück-Fördereinrichtung 26A.

Dem Stützteil 21 gegenüber liegt ein Niederhalteelement 30. Das Niederhalteelement 30 ist relativ zum Stützteil 21 zwar verstellbar. Bevorzugt ist es jedoch, wenn das Niederhalteelement 30 mit dem Stützteil 21 simultan bewegt wird, wenn die Werkstückhalteranordnung 25 den Werkstückhalter 20 von der einen Bearbeitungsstation 14A zur nächsten Bearbeitungsstation 14B oder zwischen anderen Bearbeitungsstationen 14 bzw. Bearbeitungsstationen und Beladestationen/Entladestationen 14A - 14F bewegt. Mithin kann das Werkstück 80 zwischen dem Stützteil 21 und dem Niederhalteelement 30 angeordnet bleiben, wenn die Werkstückhalteranordnung 25 innerhalb der Werkzeugmaschine oder Bruchtrennmaschine 11 bewegt wird.

Das Werkstück 80 ist zwischen dem Stützteil 21 und dem Niederhalteelement 30 mit einem Bewegungsspielraum 33 gehalten. Dieser ist in der Zeichnung etwas größer dargestellt als in der Realität, um die Funktionsweise der Reinigungsvorrichtung 10 leichter erklärbar zu machen.

Beispielsweise handelt es sich bei dem Niederhalteelement 30 um eine Halteplatte 31, wobei auch andere mechanische Gestaltungen möglich sind, beispielsweise ein Anschlagkörper oder dergleichen. Jedenfalls kann das Werkstück 80 von dem Stützteil 21 weg nach oben in Richtung des Niederhalteelements 30 bewegt werden, so dass es an dessen Unterseite 32 anschlägt. Wenn das Werkstück 80 wieder nach unten fällt, schlägt es auf der Oberseite 28 des Stützteils 21, insbesondere auf den Stützflächen oder Stützvorsprüngen 23 an.

Bei diesem Vorgang fallen aus einem Spalt oder Abstand 90 zwischen den Bruchtrennflächen 88, 89 Verunreinigungen oder Partikel 98 nach unten, so dass die Bruchtrennflächen 88, 89 gereinigt werden.

Zum Antreiben des Werkstücks 80 zwischen den Komponenten des Werkstückhalters 20, nämlich dem Stützteil 21 und dem Niederhalteelement 30, ist eine Vibrationseinrichtung 40 vorgesehen. Die Vibrationseinrichtung 40 weist einen Vibrationsantrieb 41 auf. Der Vibrationsantrieb 41 ist vorzugsweise ein Oszillationsantrieb, d.h. er führt oszillierende, insbesondere linear oszillierende, Bewegungen durch. Dabei wird ein Läufer 43 von einem Stator 42 angetrieben bzw. bewegt sich relativ zu einem Stator 42 des Vibrationsantriebs 41. Beispielsweise handelt es sich bei dem Vibrationsantrieb 41 um einen elektrischen Linearantrieb, um einen pneumatischen oder hydraulischen Antrieb oder dergleichen.

Am freien Endbereich des Läufers 43 ist ein Mitnehmer 44 für das Werkstück 80 angeordnet. Der Mitnehmer 44 kann am Läufer 43 befestigt sein. Es ist auch möglich, dass der Mitnehmer 44 und der Läufer 43 voneinander separate Bauteile sind, d. h. dass der Läufer 43 beispielsweise zu Mitnehmer 44 hin und von diesem weg bewegbar ist. Der Läufer 43 und der Mitnehmer 44 können relativ zueinander beweglich sein.

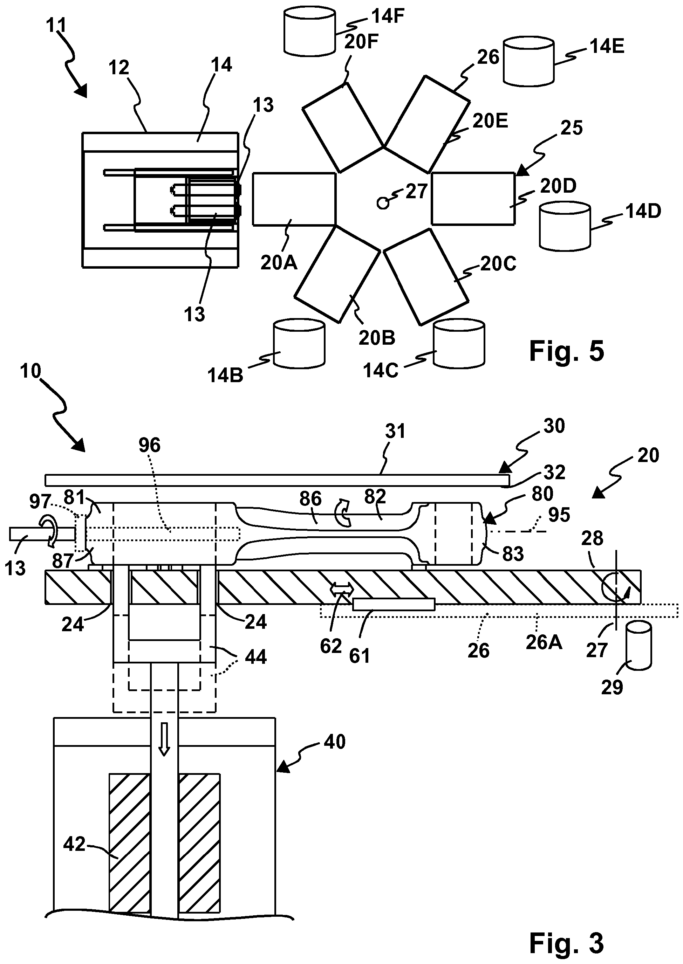

Der Mitnehmer 44 hat eine Mitnehmer-Gabel 45 oder mehrere Mitnehmer-Gabeln 45. Beispielsweise hat der Mitnehmer 44 Betätigungsarme 46, 47, die an den Werkstückteilen 81, 82 angreifen, insbesondere an dessen unterer Stirnseite 91 eine Kraft ausüben. Der Mitnehmer 44 durchdringt das Stützteil 21 an Durchtrittsöffnungen 24. Somit können die Betätigungsarme 46, 47, die lediglich punktuell, nämlich im Bereich von Betätigungsflächen 94 auf das Werkstück 80 einwirken, in die in Figur 3 dargestellte Inaktivstellung bequem verstellt werden.

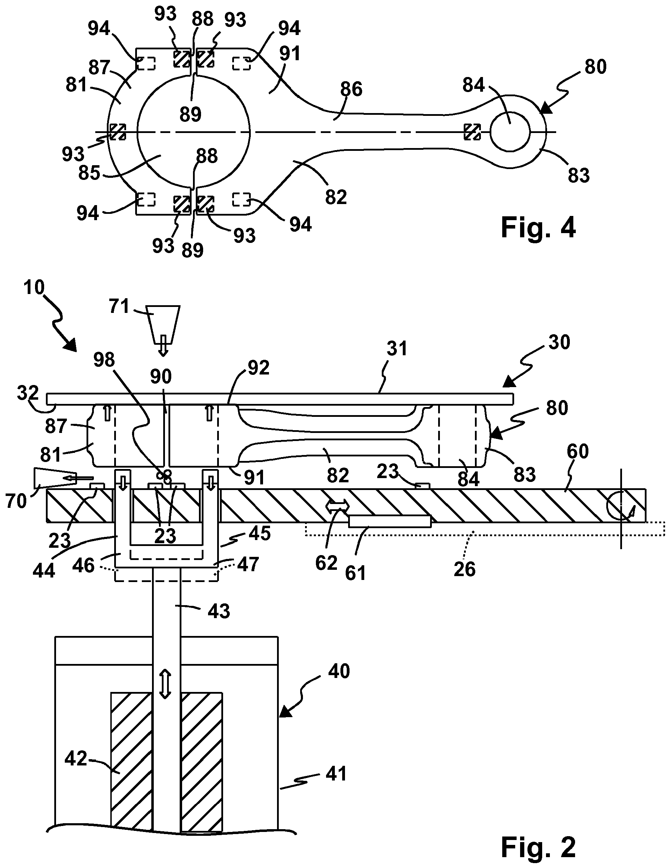

Wenn der Vibrationsantrieb 41 eine Bewegung nach oben macht, was in Figur 2 durch durchgezogene Linien des Mitnehmers 44 deutlich wird, treibt er das Werkstück 80 in Richtung des Niederhalteelements 30 an. Kurz bevor das Werkstück 80 an der Unterseite 32 der Halteplatte 31, also am Niederhalteelement 30, anschlägt, dreht sich die Bewegungsrichtung des Vibrationsantriebs 41 um, so dass der Mitnehmer 44 wieder nach unten läuft, was in Figur 2 durch eine gestrichelte Linie dargestellt ist. Dadurch kommt das Werkstück 80 frei und kann frei an der Unterseite 82 des Niederhalteelements 30 anschlagen.

An dieser Stelle sei erwähnt, dass bei einer erfindungsgemäßen Reinigungsvorrichtung harte oder weiche Niederhalteelemente 30 zum Einsatz kommen können. Wenn eine harte Gegenlage oder ein hartes Niederhalteelement 30 verwendet wird, wird bei hohen Frequenzen relativ viel Energie frei bzw. werden die Verunreinigungen / Partikel 98 bei hohen Frequenzen des Vibrationsantriebs 41 mit großer Energie von den Bruchtrennflächen 88, 89 gelöst. Wenn jedoch die Gegenlage bzw. das Niederhalteelement 30 im Bereich der Unterseite 32 etwas weicher ist, werden die Verunreinigungen / Partikel 98 von den Bruchtrennflächen 88, 89 bei niedrigeren Frequenzen des Vibrationsantriebs 41 von den Bruchtrennflächen 88, 89 mit großer Kraft abgetrennt oder abgeklopft. Somit ist also durch die Ausgestaltung des Niederhalteelements 30 in Relation zur Antriebsfrequenz des Vibrationsantriebs oder der Vibrationseinrichtung die jeweilige Schlagenergie zum Loslösen von Verunreinigungen von den Bruchtrennflächen oder der mindestens einen Bruchtrennfläche beeinflussbar.

### Nun aber zurück zum konkreten Ausführungsbeispiel:

Bevorzugt ist es vorgesehen, dass der untere Umkehrpunkt, also beispielsweise die Bewegung des Mitnehmers 44 zwischen einer Bewegungsrichtung nach unten in Richtung des Stützteils 21 und anschließend wieder nach oben in Richtung des Niederhalteelements 30 so ausgestaltet ist, dass das Werkstück 80 frei auf die Stützvorsprünge oder Stützflächen 23 aufprallen kann. Das muss aber nicht sein.

Möglich ist eine Ausführungsform, bei der das Werkstück 80 im Bereich seiner Eigenfrequenz oder der Eigenfrequenz der abgelösten Partikel 98 angetrieben wird. So kann beispielsweise vorgesehen sein, dass der Vibrationsantrieb 41 eine entsprechend hohe Frequenz aufweist, insbesondere eine Eigenfrequenz der vorigen Art. Vorteilhaft ist in diesem Zusammenhang, wenn der Mitnehmer 44 schon vordem unteren Umkehrpunkt des Werkstücks 80, d. h. vor einem möglichen Aufprall auf das Stützteil 21, das Werkstück 80 wieder in Richtung des Niederhalteelements 30 beschleunigt.

Bei der Reinigung anhand der Vibrationseinrichtung 40 ist es vorteilhaft, wenn die Werkstückteile 81, 82 in einem Abstand zueinander gehalten werden, beispielsweise in dem Abstand 90, sodass die Bruchtrennflächen 88, 89 auf Abstand gehalten sind und nicht aneinander reiben. Beispielsweise kann der Spreizdorn oder die Spreizelementanordnung 16 die Werkstückteile 81, 82 während der Vibrationsreinigung auf Abstand halten.

Es ist ergänzend oder alternativ zu dieser Maßnahme auch möglich, dass beispielsweise der Werkstückhalter entsprechende Stützkonturen oder Widerlagerkonturen aufweist, beispielsweise Anschlagflächen oder Queranschläge 35. Die Queranschläge 35 stehen beispielsweise in eine oder beide der Lagerbohrungen 84, 85 vor. Durch die Queranschläge 35 ist eine Querbewegung des Werkstücks 80 und insbesondere Werkstückteile 81, 82 zueinander hin in dem Sinne, dass die Bruchtrennflächen 88, 89 Kontakt zueinander bekommen, behindert oder verhindert.

Vorteilhaft sind zu einem besseren Entfernen der Verunreinigungen oder Partikel 98 von dem Werkstück 80, insbesondere der Bruchtrennflächen 88, 89, und/oder vom Werkstückhalter 20 eine Absaugeinrichtung 70 und/oder eine Ausblaseinrichtung 71 vorgesehen. Die Absaugeinrichtung 70 saugt die Partikel 98 beispielsweise seitlich oder unterhalb des Werkstückhalters 20 ab. Die Ausblaseinrichtung 71 kann beispielsweise von einer Oberseite her oder seitlich auf das Werkstück 80 blasen. Entsprechende Saugturbinen oder dergleichen sind dem Fachmann bekannt.

Ein bevorzugtes Konzept wird in Figur 3 deutlich, bei dem nämlich die freien Enden der Betätigungsarme 46, 47, jedenfalls des Mitnehmers 44 in einer Inaktivstellung gemäß Figur 3 derart hinter die Oberseite 28 oder hinter die Stützflächen der Stützvorsprünge 23 zurückverstellt ist, dass das Werkstück 80 lediglich noch auf den Stützvorsprüngen oder Stützflächen 23 aufliegt. Der Mitnehmer 44 ist jedenfalls außer Eingriff mit dem Werkstück 80. Sodann steht das Werkstück 80 nämlich frei für eine weitere Bearbeitung an einer Bearbeitungsstationen 14 zur Verfügung, insbesondere der Schraubstation 12. Beispielsweise kann dann anhand eines Schraubwerkzeugs eine Schraube 96 in das Werkstück 80 eingeschraubt werden, um das Werkstückteil 81 mit dem Werkstückteil 82, also den Pleueldeckel 87 mit dem Pleuelfuß 86 zu verschrauben. Ein Schraubwerkzeug 13 der Schraubstation 12 schraubt beispielsweise an einem Schraubenkopf 97, wodurch die Werkstückteile 81, 82 miteinander verschraubt werden. Zweckmäßigerweise sind 2 Schraubwerkzeuge 13 vorgesehen, so dass gleichzeitig zwei Schrauben 96 in das Werkstück 80 eingeschraubt werden können, siehe dazu Figur 5.

Vorteilhaft ist es, wenn der Werkstückhalter 20 von dem Rundtisch 26, mithin also der Werkstück-Fördereinrichtung 26A, entfernbar ist. Beispielsweise ist der Werkstückhalter 20 als eine Werkstück-Kassette 60 ausgestaltet. Am Rundtisch 26 bzw. der Werkstück-Fördereinrichtung 26A ist beispielsweise ein Kassettenhalter oder eine sonstige Halteeinrichtung 61 zum Halten der Werkstück-Kassette 60 vorgesehen. Anhand einer Montage, beispielsweise einer Schiebe- und/oder Steckbewegung, die durch einen Pfeil 62 angedeutet ist, kann der Werkstückhalter 20 mit dem Kassettenhalter bzw. der Halteeinrichtung 61 in Eingriff oder außer Eingriff gebracht werden. Beispielsweise umfasst die Halteeinrichtung 61 oder der Kassettenhalter Führungsschienen, Steckkonturen oder dergleichen andere Formschlusskonturen, die komplementär passend zu Gegen-Formschlusskonturen an der Werkstück-Kassette 60 sind.

Eine Variante könnte nun vorsehen, dass der Mitnehmer 44, der durch den Vibrationsantrieb 41 antreibbar ist, sozusagen durch den Rundtisch 26 hindurch oder an diesem vorbei durch Führungen 72 der Werkstück-Kassette 60, die den Durchtrittsöffnungen 24 entsprechen, in Eingriff oder außer Eingriff mit dem Werkstück 80 und dem Werkstückhalter 20 gebracht werden kann.

Ein zweckmäßiges Konzept sieht vor, dass der Mitnehmer einen Bestandteil des Werkstückhalters bildet, beispielsweise an der Kassette 60 verliersicher gehalten ist. Dies ist durch einen Mitnehmer 64 angedeutet, der an der Kassette 60 beweglich gelagert ist, beispielsweise mit Betätigungsarmen 66, 67 durch die Führungen 72 hindurch greift.

Der Mitnehmer 64, der beispielsweise eine Mitnehmer-Gabel 65 aufweist, ist anhand einer Verliersicherung 63 verliersicher an der Kassette 60 gehalten. Beispielsweise umfasst die Verliersicherung 63 ein Eingriffelement oder einen Haken, welcher in eine Halteausnehmung 73 des Mitnehmers 64 eingreift, wobei die Verliersicherung 63 in der Halteausnehmung 73 ein Bewegungsspiel hat, d. h. der Mitnehmer 64 können sich relativ zum Werkstückhalter 20 und somit zum Werkstück 80 in der beschriebenen Weise bewegen.

Die Betätigungsarme 66, 67 stehen von einem Antriebschenkel oder Antriebsabschnitt 68 des Mitnehmers 64 vor. Ein Abtrieb 69, der beispielsweise am freien Endbereich des Läufers 43 vorgesehen ist, kann auf den Mitnehmer 64 einwirken, welcher seinerseits wiederum das Werkstück 80 zu den erläuterten Bewegungen zum Niederhalteelement 30 hin antreibt.

Das Niederhalteelement 30 kann ortsfest beispielsweise an der Bearbeitungsstation 14 angeordnet sein. Beispielsweise kann der Rundtisch 26 das Stützteil 21, insbesondere mit dem daran befestigten und/oder gehaltenen und/oder abgestützten Werkstück 80, unter das Niederhalteelement 30 drehen oder schwenken.

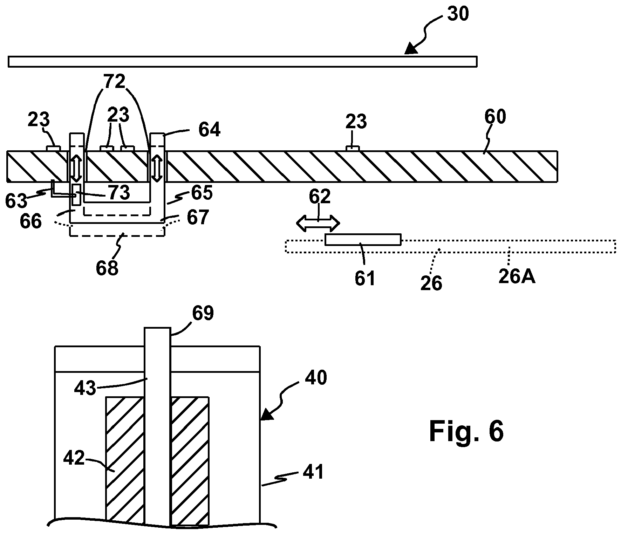

Möglich ist aber auch, dass das Stützteil 21 und das Niederhalteelement 30 Bestandteile einer Baugruppe, beispielsweise der Kassette 60 bilden, und somit als eine Baugruppe an der Werkstück-Fördereinrichtung 26A lösbar befestigbar sind. Das ist in Figur 6 angedeutet.

## Patentansprüche

1. Reinigungsvorrichtung zur Reinigung mindestens einer Bruchtrennfläche (88, 89) eines Werkstücks (80), die durch Bruchtrennung hergestellt ist, wobei die Reinigungsvorrichtung (10) mindestens eine Vibrationseinrichtung (40) zur Erzeugung von Vibrationen des Werkstücks (80) und einen Werkstückhalter (20) zum Halten des Werkstücks (80) aufweist, wobei der Werkstückhalter (20) ein Stützteil (21) zum Auflegen des Werkstücks (80) und ein dem Stützteil (21) gegenüberliegendes Niederhalteelement (30) aufweist, zwischen denen das Werkstück (80) mit einem vertikalen Bewegungsspielraum (33) gehalten ist, und dass die Vibrationseinrichtung (40) einen Vibrationsantrieb (41) und einen durch den Vibrationsantrieb (41) antreibbaren Mitnehmer (44) zum Beschleunigen des Werkstücks (80) in Richtung des Niederhalteelements (30) aufweist, sodass das Werkstück (80) gegen das Niederhalteelement (30) prallt und Verunreinigungen (98) von der Bruchtrennfläche (88, 89) abfallen.

2. Reinigungsvorrichtung nach Anspruch 1, **dadurch gekennzeichnet, dass** ein oberer Bewegungsumkehrpunkt des Mitnehmers (44) zu einer Bewegungsumkehr aus einer Bewegungsrichtung zu dem Niederhalteelement (30) hin zu einer Bewegungsrichtung von dem Niederhalteelement (30) weg so angeordnet ist, dass das Werkstück (80) vor dem Aufprall auf das Niederhalteelement (30) von dem Mitnehmer (44) freikommt.

3. Reinigungsvorrichtung nach Anspruch 1 oder 2, **dadurch gekennzeichnet, dass** ein unterer Bewegungsumkehrpunkt des Mitnehmers (44) zu einer Bewegungsumkehr aus einer Bewegungsrichtung zu dem Stützteil (21) hin und von dem Stützteil (21) weg so angeordnet ist, dass das Werkstück (80) ungebremst durch den Mitnehmer (44) frei auf das Stützteil (21) aufprallen kann.

4. Reinigungsvorrichtung nach einem der vorhergehenden Ansprüche, **dadurch gekennzeichnet, dass** der Mitnehmer (44) zu einem Beschleunigungseingriff an einer dem Stützteil (21) zugewandten Unterseite des Werkstücks (80) angeordnet ist, sodass er das Werkstück (80) von seiner Unterseite her in Richtung des Niederhalteelements (30) beschleunigt.

5. Reinigungsvorrichtung nach einem der vorhergehenden Ansprüche, **dadurch gekennzeichnet, dass** die Vibrationseinrichtung (40) an einer Unterseite des Stützteils (21) angeordnet ist und in eine Inaktivstellung verstellbar ist, bei der der Mitnehmer (44) außer Eingriff mit dem Werkstück (80) und/oder nicht vor eine Oberseite des Stützteils (21) vorstehend, insbesondere hinter die Oberseite zurück, verstellt ist, sodass das Werkstück (80) für eine weitere Werkstückbearbeitung und/oder für eine Vorförderung zu einer neben der Reinigungsvorrichtung (10) angeordneten Bearbeitungsstation (14) frei kommt, und/oder dass das Stützteil (21) mindestens eine Durchtrittsöffnung für den Mitnehmer (44) aufweist, durch den hindurch der Mitnehmer (44) in Eingriff oder Kontakt mit dem Werkstück (80) gelangen kann, und/oder dass der Mitnehmer (44) eine Mitnehmer-Gabel (45) aufweist und/oder ein von dem Werkstückhalter (20) separates Bauteil bildet und/oder an dem Werkstück (80) im Bereich einer Lageröffnung des Werkstücks (80) angreift.

6. Reinigungsvorrichtung nach einem der vorhergehenden Ansprüche, **dadurch gekennzeichnet, dass** der Werkstückhalter (20) zum Halten einander zugeordneter und zueinander passender und durch die Bruchtrennung voneinander getrennter Werkstückteile (81, 82), insbesondere eines Pleuelfußes und eines Pleueldeckels, des Werkstücks (80) vorgesehen und ausgestaltet ist.

7. Reinigungsvorrichtung nach Anspruch 6, **dadurch gekennzeichnet, dass** sie zur Reinigung einander gegenüberliegender Bruchtrennflächen (88, 89) der Werkstückteile (81, 82) ausgestaltet ist, wobei vorteilhaft vorgesehen ist, dass der Werkstückhalter (20) zu einem Halten der Bruchtrennflächen (88, 89) in einem Abstand (90) zueinander ausgestaltet ist und/oder Stützflächen zum Halten der Werkstückteile in einem Abstand (90) zueinander aufweist.

8. Reinigungsvorrichtung nach einem der vorhergehenden Ansprüche, **dadurch gekennzeichnet, dass** sie einen Bestandteil einer Bruchtrennvorrichtung (15) bildet oder zusammen mit einer Bruchtrennvorrichtung (15) ein System bildet, wobei die Bruchtrennvorrichtung (15) eine Spreizelementanordnung (16) zum Bruchtrennen des Werkstücks (80) in voneinander getrennte Werkstückteile (81, 82) aufweist und die Spreizelementanordnung (16) zu einem Halten der Werkstückteile (81, 82) in einem Abstand (90) zueinander angeordnet und/oder ausgestaltet ist, während die Vibrationseinrichtung (40) das Werkstück (80) antreibt.

9. Reinigungsvorrichtung nach einem der vorhergehenden Ansprüche, **dadurch gekennzeichnet, dass** der Mitnehmer (44) zu einem unmittelbaren Einwirken auf das Werkstück (80) und/oder zum Beschleunigen von mindestens zwei durch die Bruchtrennung voneinander getrennte Werkstückteile (81, 82) des Werkstücks (80) in Richtung des Niederhalteelements (30) angeordnet und ausgestaltet ist und/oder dass die Anordnung von Stützteil (21) und Niederhalteelement (30) und/oder der Werkstückhalter (20) zum Halten des Werkstücks (80) derart ausgestaltet ist, dass die mindestens eine Bruchtrennfläche (88, 89) eine im wesentlichen vertikale Orientierung aufweist.

10. Reinigungsvorrichtung nach einem der vorhergehenden Ansprüche, **dadurch gekennzeichnet, dass** das Stützteil (21) und das Niederhalteelement (30) zum Halten des Werkstücks (80) derart ausgestaltet und angeordnet sind, dass das Werkstück (80) verdrehsicher um mindestens eine, vorzugsweise mehrere oder alle, Achsen zwischen dem Stützteil (21) und dem Niederhalteelement (30) gehalten ist, die parallel oder im Wesentlichen parallel zu Anschlagebenen verlaufen, in denen das Stützteil (21) und das Niederhalteelement (30) das Werkstück (80) halten.

11. Reinigungsvorrichtung nach einem der vorhergehenden Ansprüche, **dadurch gekennzeichnet, dass** das Stützteil (21) und/oder das Niederhalteelement (30) einen Bestandteil einer Werkstückhalteranordnung (25), insbesondere eines Rundtisches (26), zum Halten von mindestens zwei Werkstücken (80) bilden, wobei Werkstücke anhand der Werkstückhalteranordnung (25) zwischen mindestens zwei Bearbeitungsstationen förderbar sind, von denen eine die Reinigungsvorrichtung (10) bildet.

12. Reinigungsvorrichtung nach einem der vorhergehenden Ansprüche, **dadurch gekennzeichnet, dass** das Werkstück (80) ein Motorbauteil und/oder ein Pleuel (83) ist und/oder dass die mindestens eine Bruchtrennfläche (88, 89) neben einer Lageraufnahme des Werkstücks (80) angeordnet ist und/oder dass sie einen Bestandteil einer Bruchtrennmaschine (11) zum Bruchtrennen des Werkstücks (80) und/oder einer Bearbeitungsstation (14), insbesondere einer Bruchtrennstation und/oder einer Schraubstation, zur Bearbeitung des Werkstücks (80) bildet und/oder dass sie einen Bestandteil einer Bearbeitungsmaschine bildet, die mindestens eine Bearbeitungsstation aufweist, wobei das das Stützteil (21) und das Niederhalteelement (30) zum Halten des Werkstücks (80) derart ausgestaltet und angeordnet sind, dass das Werkstück (80) zu einer Bearbeitung durch die weitere Bearbeitungsstation (14), insbesondere zu einer Verschraubung, von zuvor durch die Bruchtrennung voneinander getrennter Werkstückteile (81, 82) des Werkstücks in einer Relativposition, bei der die Bruchtrennflächen (88, 89) der Werkstückteile (81, 82) aneinander anliegen, gehalten ist.

13. Reinigungsvorrichtung nach einem der vorhergehenden Ansprüche, **dadurch gekennzeichnet, dass** die Vibrationseinrichtung (40) als Vibrationsantrieb (41) mindestens einen Linearantrieb und/oder Oszillationsantrieb zum Antreiben des Mitnehmers (44) aufweist und/oder eine im Bereich einer Eigenfrequenz des Werkstücks (80) und/oder von dem Werkstück (80) abgelöster Partikel liegende Antriebsfrequenz aufweist.

14. Reinigungsvorrichtung nach einem der vorhergehenden Ansprüche, **dadurch gekennzeichnet, dass** der Mitnehmer (64) an dem Werkstückhalter (20) beweglich gelagert und/oder verliersicher gehalten ist und/oder dass der Werkstückhalter (20) anhand einer Halteeinrichtung (61) an einer Werkstück-Fördereinrichtung (26A), insbesondere einem Rundtisch (26), lösbar befestigbar ist und/oder dass sie mindestens eine Absaugeinrichtung (70) zum Absaugen von insbesondere durch Vibrationseinrichtung (40) vom Werkstück (80) abgelöster Verunreinigungen (98) und/oder mindestens eine Ausblaseinrichtung (71) zum wegblasen von insbesondere durch Vibrationseinrichtung (40) vom Werkstück (80) abgelöster Verunreinigungen (98) aufweist.

15. Reinigungsverfahren zur Reinigung mindestens einer Bruchtrennfläche (88, 89) eines Werkstücks (80), die durch Bruchtrennung hergestellt ist, umfassend
- Erzeugung von Vibrationen des Werkstücks (80), welches an einem Werkstückhalter (20) gehalten ist, anhand einer Vibrationseinrichtung (40)
- Halten des Werkstücks (80) zwischen einem Stützteil (21) des Werkstückhalters (20), auf das das Werkstück (80) aufgelegt ist, und einem dem Stützteil (21) gegenüberliegenden Niederhalteelement (30), zwischen denen das Werkstück (80) mit einem vertikalen Bewegungsspielraum (33) gehalten ist, und
- Beschleunigen des Werkstücks (80) in Richtung des Niederhalteelements (30) durch einen Mitnehmer (44) der Vibrationseinrichtung (40), sodass das Werkstück (80) gegen das Niederhalteelement (30) prallt und Verunreinigungen (98) von der Bruchtrennfläche (88, 89) abfallen.

## Claims

1. Cleaning device for cleaning at least one fracture separation surface (88, 89) - produced by fracture separation - of a workpiece (80), wherein the cleaning device (10) has at least one vibration device (40) for generating vibrations of the workpiece (80) and a workholder (20) for holding the workpiece (80), wherein the workholder (20) has a support part (21) for placing the workpiece (80) and a hold-down element (30) located opposite the support part (21), between which the workpiece (80) is held with a vertical movement clearance (33), and wherein the vibration device (40) has a vibration drive (41) and a driver (44) which can be driven by the vibration drive (41) for accelerating the workpiece (80) towards the hold-down element (30), so that the workpiece (80) crashes against the hold-down element (30) and impurities (98) drop off the fracture separation surface (88, 89).

2. Cleaning device according to claim 1, **characterised in that** an upper movement reversal point of the driver (44) for a movement reversal from a direction of movement towards the hold-down element (30) to a direction of movement away from the hold-down element (30) is arranged in such a way that the workpiece (80) gets clear of the driver (44) before hitting the hold-down element (30).

3. Cleaning device according to claim 1 or 2, **characterised in that** a lower movement reversal point of the driver (44) for a movement reversal from a direction of movement towards the support part (21) and away from the support part (21) is arranged in such a way that the workpiece (80) can freely crash against the support part (21) without being braked by the driver (44).

4. Cleaning device according to any of the preceding claims, **characterised in that** the driver (44) is arranged for an acceleration intervention in such a way on an underside - facing the support part (21) - of the workpiece (80) that it accelerates the workpiece (80) from its underside towards the hold-down element (30).

5. Cleaning device according to any of the preceding claims, **characterised in that** the vibration device (40) is located on an underside of the support part (21) and can be moved into an inactive position in which the driver (44) is disengaged from the workpiece (80) and/or does not project in front of a top side of the support part (21) and is in particular moved back behind the top side, so that the workpiece (80) is released for further workpiece machining and/or for forward transfer to a machining station (14) located adjacent to the cleaning device (10), and/or **in that** the support part (21) has at least one through-opening for the driver (44), through which the driver (44) can come into engagement or contact with the workpiece (80), and/or **in that** the driver (44) has a driver fork (45) and/or is a component separate from the workholder (20) and/or acts on the workpiece (80) in the region of a bearing opening of the workpiece (80).

6. Cleaning device according to any of the preceding claims, **characterised in that** the workholder (20) is provided and designed to hold mutually assigned and matching workpiece parts (81, 82) - separated by the fracture separation - of the workpiece (80), in particular a big end and a connecting rod cap.

7. Cleaning device according to claim 6, **characterised in that** it is designed to clean mutually opposite fracture separation surfaces (88, 89) of the workpiece parts (81, 82), it being advantageously provided that the workholder (20) is designed to hold the fracture separation surfaces (88, 89) at a mutual distance (90) and/or has support surfaces for holding the workpiece parts at a mutual distance (90).

8. Cleaning device according to any of the preceding claims, **characterised in that** it forms a part of a fracture separation device (15) or forms a system together with a fracture separation device (15), wherein the a fracture separation device (15) has a spreading element assembly (16) for fracture-separating the workpiece (80) into separate workpiece parts (81, 82) and the spreading element assembly (16) is arranged and/or designed to hold the workpiece parts (81, 82) at a distance (90) from each other while the vibration device (40) drives the workpiece (80).

9. Cleaning device according to any of the preceding claims, **characterised in that** the driver (44) is arranged and designed to act directly on the workpiece (80) and/or to accelerate at least two workpiece parts (81, 82) - separated by the fracture separation - of the workpiece (80) towards the hold-down element (30), and/or **in that** the assembly of support part (21) and hold-down element (30) and/or the workholder (20) is/are designed to hold the workpiece (80) in such a way that the at least one fracture separation surface (88, 89) has a substantially vertical orientation.

10. Cleaning device according to any of the preceding claims, **characterised in that** the support part (21) and the hold-down element (30) are designed and arranged to hold the workpiece (80) in such a way that the workpiece (80) is held non-rotatably about at least one axis, preferably about several or all axes, extending parallel or substantially parallel to the stop surface between the support part (21) and the hold-down element (30), in which axes the support part (21) and the hold-down element (30) hold the workpiece (80).

11. Cleaning device according to any of the preceding claims, **characterised in that** the support part (21) and/or the hold-down element (30) form(s) a part of a workholder assembly (25), in particular of a rotary table (26), for holding at least two workpieces (80), wherein workpieces can be conveyed by means of the workholder assembly (25) between at least two machining stations, one of which forms the cleaning device (10).

12. Cleaning device according to any of the preceding claims, **characterised in that** the workpiece (80) is an engine component and/or a connecting rod (83), and/or **in that** the at least one fracture separation surface (88, 89) is located adjacent to a bearing mount of the workpiece (80), and/or **in that** it forms a part of a fracture separation machine (11) for the fracture separation of the workpiece (80) and/or of a machining station (14), in particular of a fracture separation station and/or a screwing station for machining the workpiece (80), and/or **in that** it forms a part of a machining unit having at least one machining station, wherein the support part (21) and the hold-down element (30) are designed and arranged to hold the workpiece (80) in such a way that the workpiece (80) is held in a relative position in which the fracture separation surfaces (88, 89) of the workpiece parts (81, 82) lie against each other for machining by the further machining station (14), in particular for screwing together workpiece parts (81, 82) of the workpiece which have previously been separated from each other by fracture separation.

13. Cleaning device according to any of the preceding claims, **characterised in that** the vibration device (40) has at least one linear drive or oscillation drive as vibration drive (41) for driving the driver (44) and/or a drive frequency within the range of a resonant frequency of the workpiece (80) and/or of particles detached from the workpiece (80).

14. Cleaning device according to any of the preceding claims, **characterised in that** the driver (64) is mounted movably or held captively on the workholder (20), and/or in that the workholder (20) can be releasably secured by means of a holding device to a workpiece conveying device (25A), in particular to a rotary table (26), and/or **in that** is has at least one extraction device (70) for extracting impurities (98) that have in particular been detached from the workpiece (80) by the vibration device (40) and/or at least one blow-out device (71) for blowing away impurities (98) that have in particular been detached from the workpiece (80) by the vibration device (40).

15. Cleaning method for cleaning at least one fracture separation surface (88, 89) - produced by fracture separation - of a workpiece (80), comprising
- the generation of vibrations of the workpiece (80) held at a workholder (20) by means of a vibration device (40),
- the holding of the workpiece (80) between a support part (21) of the workholder (20), on which the workpiece (80) is placed, and a hold-down element (30) located opposite the support part (21), between which the workpiece (80) is held with a vertical movement clearance (33), and
- the acceleration of the workpiece (80) towards the hold-down element (30) by a driver (44) of the vibration device (40), so that the workpiece (80) crashes against the hold-down element (30) and impurities (98) drop off the fracture separation surface (88, 89).

## Revendications

1. Dispositif de nettoyage pour le nettoyage d'au moins une surface de séparation par rupture (88, 89) d'une pièce à usiner (80) qui est fabriquée par séparation par rupture, le dispositif de nettoyage (10) présentant au moins un dispositif de vibration (40) pour la génération de vibrations de la pièce à usiner (80) et un porte-pièce (20) pour le maintien de la pièce à usiner (80), le porte-pièce (20) présentant une partie d'appui (21) pour la pose de la pièce à usiner (80) et un élément de serre-flan (30) opposé à la partie d'appui (21), entre lesquels la pièce à usiner (80) est maintenue avec une marge de déplacement (33) vertical, et le dispositif de vibration (40) présentant un entraînement de vibration (41) et un élément d'entraînement (44) pouvant être entraîné par l'entraînement de vibration (41) pour l'accélération de la pièce à usiner (80) en direction de l'élément de serre-flan (30) de sorte que la pièce à usiner (80) heurte l'élément de serre-flan (30) et des impuretés (98) tombent de la surface de séparation par rupture (88, 89).

2. Dispositif de nettoyage selon la revendication 1, **caractérisé en ce qu'**un point de renversement de déplacement supérieur de l'élément d'entraînement (44) est agencé pour un renversement de déplacement d'un sens de déplacement vers l'élément de serre-flan (30) et loin de l'élément de serre-flan (30) de sorte que la pièce à usiner (80) sorte avant l'impact de l'élément de serre-flan (30) par l'élément d'entraînement (44).

3. Dispositif de nettoyage selon la revendication 1 ou 2, **caractérisé en ce qu'**un point de renversement de déplacement inférieur de l'élément d'entraînement (44) est agencé pour un renversement de déplacement d'un sens de déplacement vers la partie d'appui (21) et loin de la partie d'appui (21) de sorte que la pièce à usiner (80) puisse heurter librement la partie d'appui (21) sans être freinée par l'élément d'entraînement (44).

4. Dispositif de nettoyage selon l'une des revendications précédentes, **caractérisé en ce que** l'élément d'entraînement (44) est agencé pour une prise d'accélération au niveau d'un côté inférieur tourné vers la partie d'appui (21) de la pièce à usiner (80) de sorte à accélérer la pièce à usiner (80) depuis son côté inférieur en direction de l'élément de serre-flan (30).

5. Dispositif de nettoyage selon l'une des revendications précédentes, **caractérisé en ce que** le dispositif de vibration (40) est agencé au niveau d'un côté inférieur de la partie d'appui (21) et est réglable dans une position inactive, pour laquelle l'élément d'entraînement (44) est réglé hors prise avec la pièce à usiner (80) et/ou ne dépassant pas d'un côté supérieur de la partie d'appui (21), en particulier est ramené derrière le côté supérieur, de sorte que la pièce à usiner (80) sorte pour la poursuite d'un usinage de pièce à usiner et/ou pour un prétransport à une station d'usinage (14) agencée près du dispositif de nettoyage (10), et/ou que la partie d'appui (21) présente au moins une ouverture de passage pour l'élément d'entraînement (44), par laquelle l'élément d'entraînement (44) peut parvenir en prise ou en contact avec la pièce à usiner (80), et/ou que l'élément d'entraînement (44) présente une fourche d'élément d'entraînement (45) et/ou forme un composant séparé du porte-pièce (20) et/ou agit sur la pièce à usiner (80) dans la zone d'une ouverture de palier de la pièce à usiner (80).

6. Dispositif de nettoyage selon l'une des revendications précédentes, **caractérisé en ce que** le porte-pièce (20) est prévu et configuré pour le maintien de parties de pièce à usiner (81, 82) associées l'une à l'autre et adaptées l'une à l'autre et séparées l'une de l'autre par la séparation par rupture, en particulier d'un pied de bielle et d'un couvercle de bielle, de la pièce à usiner (80).

7. Dispositif de nettoyage selon la revendication 6, **caractérisé en ce qu'**il est configuré pour le nettoyage de surfaces de séparation par rupture (88, 89) opposées l'une à l'autre des parties de pièces à usiner (81, 82), dans lequel il est prévu avantageusement que le porte-pièce (20) soit configuré pour un maintien des surfaces de séparation par rupture (88, 89) à une distance (90) l'une de l'autre et/ou présente des surfaces d'appui pour le maintien des parties de pièce à usiner à une distance (90) l'une de l'autre.

8. Dispositif de nettoyage selon l'une des revendications précédentes, **caractérisé en ce qu'**il forme un constituant d'un dispositif de séparation par rupture (15) ou forme un système conjointement avec un dispositif de séparation par rupture (15), dans lequel le dispositif de séparation par rupture (15) présente un agencement d'élément d'écartement (16) pour la séparation par rupture de la pièce à usiner (80) en parties de pièce à usiner (81, 82) séparées l'une de l'autre et l'agencement d'élément d'écartement (16) est agencé et/ou configuré pour un maintien des parties de pièce à usiner (81, 82) à une distance (90) l'une de l'autre alors que le dispositif de vibration (40) entraîne la pièce à usiner (80).

9. Dispositif de nettoyage selon l'une des revendications précédentes, **caractérisé en ce que** l'élément d'entraînement (44) est agencé et configuré pour une action directe sur la pièce à usiner (80) et/ou pour l'accélération d'au moins deux parties de pièce à usiner (81, 82) séparées l'une de l'autre par la séparation par rupture de la pièce à usiner (80) en direction de l'élément de serre-flan (30) et/ou que l'agencement de la partie d'appui (21) et de l'élément de serre-flan (30) et/ou le porte-pièce (20) est configuré pour le maintien de la pièce à usiner (80) de telle manière que l'au moins une surface de séparation par rupture (88, 89) présente une orientation sensiblement verticale.

10. Dispositif de nettoyage selon l'une des revendications précédentes, **caractérisé en ce que** la partie d'appui (21) et l'élément de serre-flan (30) sont configurés et agencés pour le maintien de la pièce à usiner (80) de telle manière que la pièce à usiner (80) soit maintenue sans pouvoir tourner autour d'au moins un, de préférence plusieurs ou tous les axes entre la partie d'appui (21) et l'élément de serre-flan (30) qui s'étendent parallèlement ou sensiblement parallèlement aux plans de butée, dans lesquels la partie d'appui (21) et l'élément de serre-flan (30) maintiennent la pièce à usiner (80).

11. Dispositif de nettoyage selon l'une des revendications précédentes, **caractérisé en ce que** la partie d'appui (21) et/ou l'élément de serre-flan (30) forment un constituant d'un agencement de porte-pièce (25), en particulier d'une table ronde (26), pour le maintien d'au moins deux pièces à usiner (80), dans lequel des pièces à usiner peuvent être transportées au moyen de l'agencement de porte-pièce (25) entre au moins deux stations d'usinage, dont une forme le dispositif de nettoyage (10).

12. Dispositif de nettoyage selon l'une des revendications précédentes, **caractérisé en ce que** la pièce à usiner (80) est un composant motorisé et/ou une bielle (83) et/ou que l'au moins une surface de séparation par rupture (88, 89) est agencée à côté d'un logement de palier de la pièce à usiner (80) et/ou qu'elle forme un constituant d'une machine de séparation par rupture (11) pour la séparation par rupture de la pièce à usiner (80) et/ou d'une station d'usinage (14), en particulier d'une station de séparation par rupture et/ou d'une station de vissage, pour l'usinage de la pièce à usiner (80) et/ou qu'elle forme un constituant d'une machine d'usinage qui présente au moins une station d'usinage, dans lequel la partie d'appui (21) et l'élément de serre-flan (30) sont configurés et agencés pour le maintien de la pièce à usiner (80) de telle manière que la pièce à usiner (80) soit maintenue pour un usinage par l'autre station d'usinage (14), en particulier pour un vissage, de parties de pièce à usiner (81, 82) séparées précédemment par la séparation par rupture l'une de l'autre de la pièce à usiner dans une position relative, pour laquelle les surfaces de séparation par rupture (88, 89) des parties de pièce à usiner (81, 82) reposent l'une contre l'autre.

13. Dispositif de nettoyage selon l'une des revendications précédentes, **caractérisé en ce que** le dispositif de vibration (40) présente comme entraînement de vibration (41) au moins un entraînement linéaire et/ou un entraînement d'oscillation pour l'entraînement de l'élément d'entraînement (44) et/ou présente une fréquence d'entraînement se trouvant dans la plage d'une propre fréquence de la pièce à usiner (80) et/ou de particules détachées de la pièce à usiner (80).

14. Dispositif de nettoyage selon l'une des revendications précédentes, **caractérisé en ce que** l'élément d'entraînement (64) est logé de manière mobile au niveau du porte-pièce (20) et/ou est maintenu de manière imperdable et/ou que le porte-pièce (20) peut être fixé de manière détachable au moyen d'un dispositif de retenue (61) à un dispositif de transport de pièce à usiner (26A), en particulier une table ronde (26) et/ou qu'il présente au moins un dispositif d'aspiration (70) pour l'aspiration d'impuretés (98) détachées en particulier par le dispositif de vibration (40) de la pièce à usiner (80) et/ou au moins un dispositif de soufflage (71) pour le retrait par soufflage d'impuretés (98) détachées en particulier par le dispositif de vibration (40) de la pièce à usiner (80).

15. Procédé de nettoyage pour le nettoyage d'au moins une surface de séparation par rupture (88, 89) d'une pièce à usiner (80) qui est fabriquée par séparation par rupture, comprenant
- la génération de vibrations de la pièce à usiner (80) qui est maintenue au niveau d'un porte-pièce (20), au moyen d'un dispositif de vibration (40)
- le maintien de la pièce à usiner (80) entre une partie d'appui (21) du porte-pièce (20), sur lequel la pièce à usiner (80) est posée, et un élément de serre-flan (30) opposé à la partie d'appui (21), entre lesquels la pièce à usiner (80) est maintenue avec une marge de déplacement (33) vertical, et
- l'accélération de la pièce à usiner (80) en direction de l'élément de serre-flan (30) par un élément d'entraînement (44) du dispositif de vibration (40) de sorte que la pièce à usiner (80) heurte l'élément de serre-flan (30) et des impuretés (98) tombent de la surface de séparation par rupture (88, 89).
